# EUROPEAN PATENT APPLICATION

(11) **EP 4 202 877 A1**
(43) Date of publication of application: **28.06.2023**
(21) Application number: 21858427.4
(22) Date of filing: 16.02.2021
(51) Int. Cl.: G07F 17/40, G06Q 10/00, G06Q 30/06

(54) **MOBILE PHONE PURCHASING APPARATUS**

(30) Priority: 18.08.2020 KR 20200003011 U
(71) Applicant: Mintit Co., Ltd., Gyeonggi-do 10117 (KR)
(72) Inventor: CHO, Sung Lack, Seoul 03913 (KR); CHOI, Hang Seok, Seoul 08371 (KR)
(74) Representative: Cabinet Beau de Loménie
(86) International application number: PCT/KR2021/001957
(87) International publication number: WO 2022/039339

(57) **Abstract**

A mobile phone purchasing apparatus according to an embodiment comprises: an inspection unit for accommodating a mobile phone and inspecting the mobile phone; a collecting unit arranged under the inspection unit to collect the mobile phone that was inspected; a display unit which is arranged on one outer side surface of the inspection unit for selecting a function related to purchasing the mobile phone or displaying information about the mobile phone; and an unloading unit for unloading the mobile phone from the collecting unit, wherein a plurality of cameras are provided on the upper surface, the lower surface, and the side surfaces of the inspection unit.

## Description

### Technical Field

The following example embodiments relate to a mobile phone purchasing apparatus.

### Background Art

As semiconductor and information technology (IT) have been developed rapidly, numerous consumers are able to newly purchase upgraded products that are newly added and improved by manufacturers every year, and thus numerous electronic devices such as portable terminals, laptops, personal computers (PCs), tablets, and MP3 may be dumped or become used products every year. These used products may be purchased through various distribution methods and exported to developing countries, except for some of them being resold through used mobile phone resales, or domestically recycled by waste disassembling.

However, these used mobile phones may be purchased by retailers (e.g., including intermediary wholesalers) having unmanned purchase kiosks (unmanned devices) or certain office spaces, and particularly the purchases made through various retailers may pose some issues.

In the case of store operation, in particular, not all operators may be able to test and verify devices under consistent criteria, and there may thus be a great deviation in the value assessment of target devices depending on the level of verification. In addition, a store may be operated by part-time personnel, in addition to an owner (operator) of the store, and thus providing accurate samples to customers on the selling side may be failed, causing a mutual disagreement issue.

In addition, used electronic devices may be purchased and distributed online, and there may thus be a potentially high risk of increasing a crime rate due to the nature of Internet services provided on the premise of anonymity, and recipients may not sell used electronic devices online but store them because they have no way to identify a transparent distribution structure, which may be greatly inefficient in terms of recycling resources and may force the recipients to purchase new used electronic devices while giving up the profits that may be generated otherwise by reselling used electronic devices.

Further, unmanned sales may not be readily realized in the case of used mobile phones because there are various types for each manufacturer and identifying their individual states is not easy. Korean Patent Registration Publication No. 10-0892266 discloses a system for purchasing used electronic devices.

### Disclosure of Invention

### Technical Goals

An objective according to an embodiment is to provide a mobile phone purchasing apparatus that may include data cables according to various types, and may automatically and precisely inspect a state of a mobile phone connected to a connector of a cable, calculate a purchasing price of the mobile phone, and then purchase and collect the mobile phone.

An objective according to an embodiment is to provide a mobile phone purchasing apparatus that may readily separate a data cable from a mobile phone accommodated in an inspection unit, stably and readily move the mobile phone toward a collection unit, and more accurately capture an image of an exterior of the mobile phone.

An objective according to an embodiment is to provide a mobile phone purchasing apparatus that may evenly distribute mobile phones entering a collection unit.

### Technical Solutions

According to an embodiment, a mobile phone purchasing apparatus includes an inspection unit configured to accommodate a mobile phone and perform an inspection on the mobile phone, a collection unit disposed under the inspection unit and configured to collect the mobile phone on which the inspection has been completed, a display unit disposed on one outer side surface of the inspection unit and configured to select a purchase-related function for the mobile phone or display information associated with the mobile phone, and an unloading unit configured to unload the mobile phone from the collection unit. A plurality of cameras may be disposed on upper, lower, and side surfaces of the inspection unit, and when the mobile phone is accommodated in the inspection unit, a state of the mobile phone may be automatically inspected, and when the inspection by the inspection unit has been completed, the mobile phone may be automatically moved toward the collection unit by a loader block disposed in the inspection unit.

In addition, the inspection unit may include a base formed of a transparent material and disposed in the inspection unit, a first camera disposed on an upper side of the base, a second camera disposed on a lower side of the base, third to sixth cameras disposed at corners of the side surfaces of the inspection unit, respectively, a seventh camera disposed on one side surface of the inspection unit, and a determination elememt configured to determine the state of the mobile phone.

In this case, when the mobile phone is disposed on the base, images of the upper, lower, and left and right side surfaces may be automatically captured by the first through seventh cameras, and the determination element may determine the state of the mobile phone by grade based on the images of the mobile phone captured by the plurality of cameras.

In addition, the inspection unit may include a door element disposed at the front of the inspection unit, a sensor element disposed inside the inspection unit to be adjacent to the door element and configured to detect whether a body of a user is present inside the inspection unit, and a plurality of bar-shaped lighting elements disposed at upper ends of respective side surfaces of the inspection unit. A tilt of each of the plurality of lighting elements may be adjusted to be in a direction facing the mobile phone disposed on the base.

In addition, the inspection unit may include a loader block configured to move the mobile phone, at least one data cable configured to be connected to the mobile phone through an opening of the loader block, a guide element disposed on an opening side of the loader block and configured to guide the data cable, a cover element formed in a shape surrounding an upper surface of the loader block, and a holder element formed in a shape surrounding a portion of the data cable.

In this case, the loader block may be formed in a squared U shape to cover a portion of the mobile phone, and may include a supporting structure protruding toward the front of the loader block in a tilted shape to move a portion of the mobile phone with the portion of the mobile phone lifted. The guide element may be formed in a shape in which a width increases from one side to the other side. When the mobile phone is moved by the loader block, the holder element may come into contact with a portion of the guide element and a movement thereof may be limited thereby, and thus the data cable may be prevented from being moved along with the mobile phone and be separated from the mobile phone, enabling more accurate collection of the mobile phone.

In addition, the inspection unit may include a plurality of data cables of different types, a case element having a plurality of holes formed in a shape of Y to individually accommodate and guide each of the cables, and a weight element disposed on the other side of each of the data cables and configured to automatically move a data cable downward when the data cable is separated from the mobile phone.

The mobile phone purchasing apparatus may further include a slope configured to connect the inspection unit and the collection unit. The slope may be formed in a gradient structure inclined downward to both sides with respect to a center line.

### Effects

A mobile phone purchasing apparatus according to an embodiment may include data cables according to various types, automatically and precisely inspect a state of a mobile phone connected to a connector of a cable, calculate a purchasing price of the mobile phone, and then purchase and collect the mobile phone.

A mobile phone purchasing apparatus according to an embodiment may readily separate a data cable from a mobile phone accommodated in an inspection unit, stably and readily move the mobile phone toward a collection unit, and more accurately capture an image of an exterior of the mobile phone.

A mobile phone purchasing apparatus according to an embodiment may evenly distribute mobile phones entering a collection unit.

### Brief Description of Drawings

FIGS. 1 through 3 show a mobile phone purchasing apparatus according to an embodiment.
FIGS. 4 through 6 show in detail an inspection unit of a mobile phone purchasing apparatus according to an embodiment.
FIG. 7 shows a loader block of an inspection unit of a mobile phone purchasing apparatus according to an embodiment.
FIG. 8 shows a case element and a weight element of a mobile phone purchasing apparatus according to an embodiment.
FIG. 9 shows in detail a collection unit of a mobile phone purchasing apparatus according to an embodiment.

### Best Mode for Carrying Out the Invention

Hereinafter, example embodiments will be described in detail with reference to the accompanying drawings. However, various modifications may be made to the example embodiments, and the scope of matters claimed herein are not limited or restricted by these example embodiments. The example embodiments should be understood to include all changes, equivalents, and replacements within the idea and the technical scope of the present disclosure.

The terms used herein are for the purpose of describing particular example embodiments only and are not to be limiting of the example embodiments. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments pertain. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, when describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

In addition, in the description of the components, terms such as first, second, A, B, (a), (b) or the like may be used herein when describing components of the example embodiments. These terms are used only for the purpose of discriminating one element from another element, and the nature, the sequences, or the orders of the elements are not limited by the terms. When one element is described as being "connected," "coupled," or "attached" to another element, it should be understood that one element may be connected or attached directly to another element, and an intervening element may also be "connected," "coupled," or "attached" to the elements.

The same name may be used to describe an element included in one example embodiment and an element having a common function as the foregoing element in another example embodiment. Unless otherwise defined, the description of the example embodiments may be applicable to the following example embodiments and a repeated description related thereto will be omitted for conciseness.

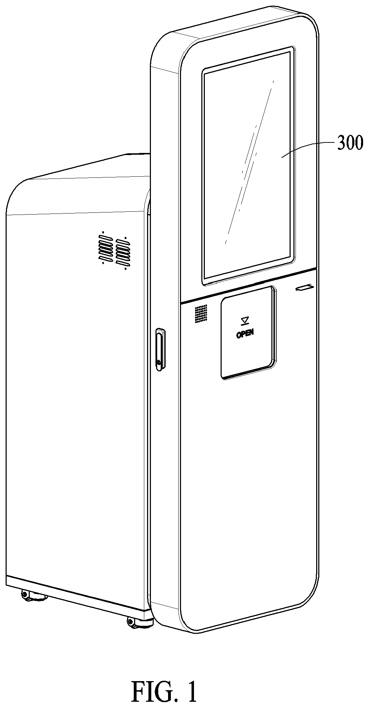

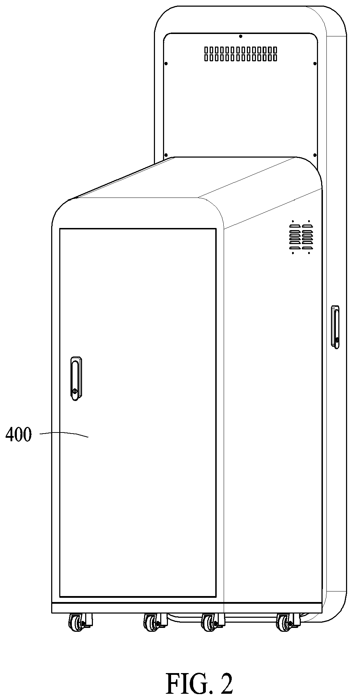

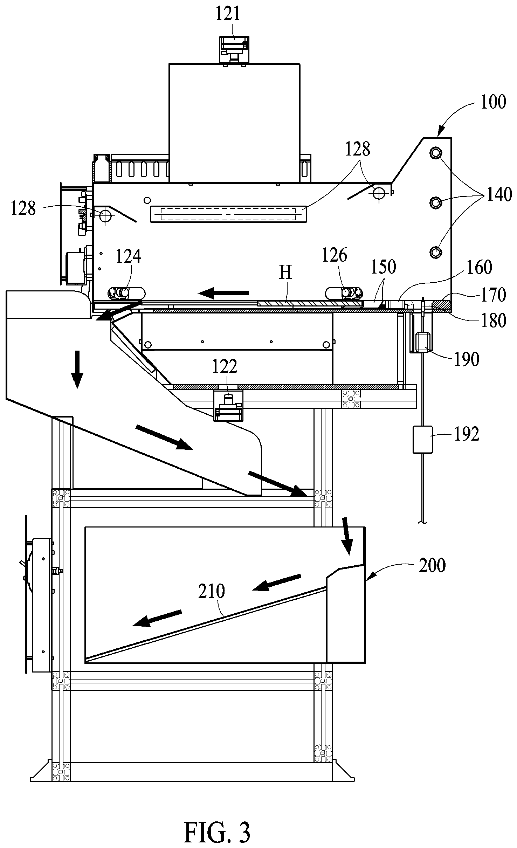

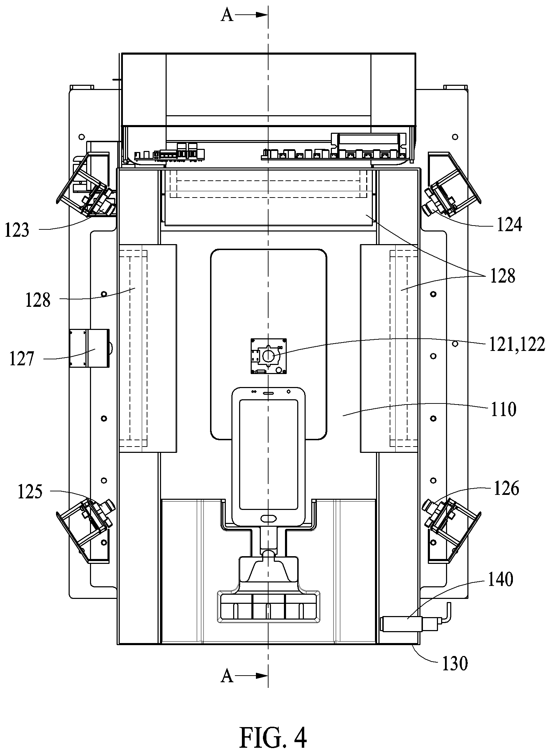

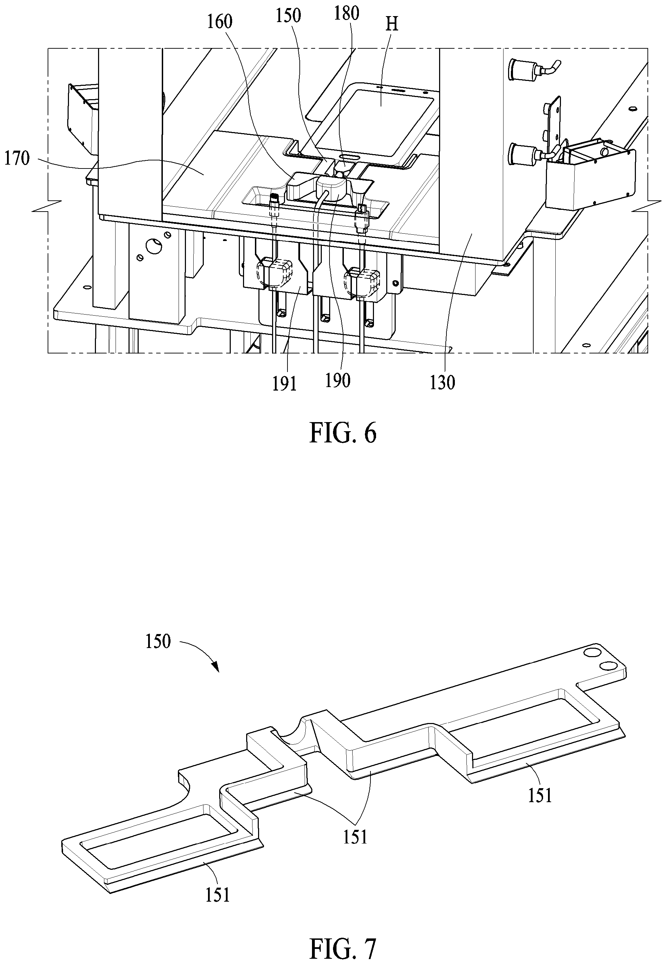

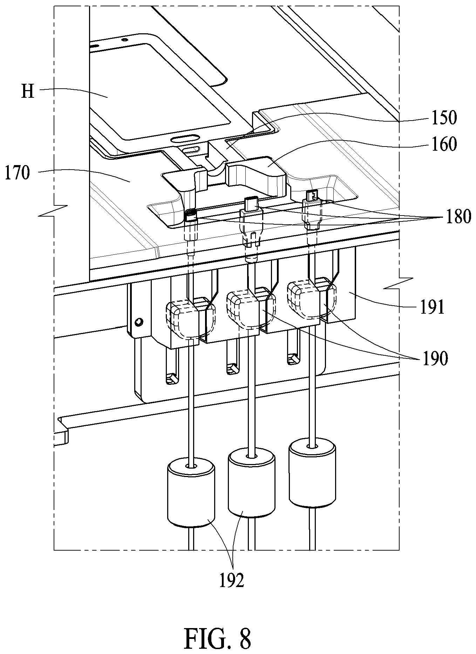

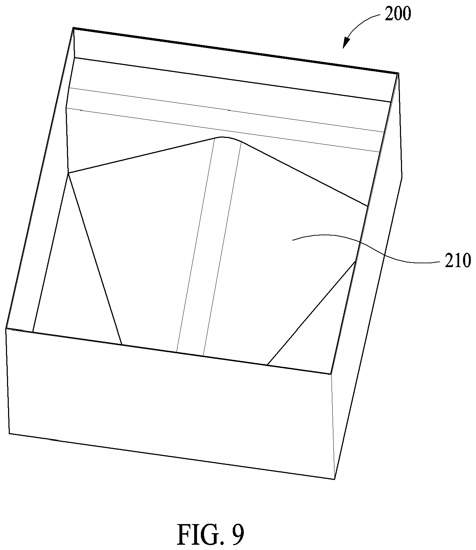

FIGS. 1 through 3 show an exterior and a configuration of a mobile phone purchasing apparatus according to an embodiment, FIGS. 4 through 6 show in detail an inspection unit of a mobile phone purchasing apparatus according to an embodiment, FIG. 7 shows a loader block of an inspection unit of a mobile phone purchasing apparatus according to an embodiment, FIG. 8 shows a case element and a weight element of a mobile phone purchasing apparatus according to an embodiment, and FIG. 9 shows in detail a collection unit of a mobile phone purchasing apparatus according to an embodiment.

Referring to FIGS. 1 to 3, a mobile phone purchasing apparatus according to an embodiment may include an inspection unit 100 configured to accommodate a mobile phone and perform an inspection on the mobile phone, a collection unit 200 disposed under the inspection unit 100 and configured to collect the mobile phone that has been inspected, a display unit 300 disposed on one outer side surface of the inspection unit 100 and configured to select a purchase-related function for the mobile phone or display information associated with the mobile phone, and a unloading unit 400 configured to unload the mobile phone from the collection unit 200.

In this case, a plurality of cameras may be disposed on upper, lower, and side surfaces of an inner side of the inspection unit 100 to enable an automatic inspection of a state of a mobile phone H when the mobile phone is accommodated in the inspection unit 100 and enable an automatic movement of the mobile phone toward the collection unit 200 by a loader block disposed in the inspection unit 100 when the inspection by the inspection unit 100 has been completed.

In the display unit 300, a touch liquid-crystal display (LCD), a printer, a drawer door, a speaker, a front door handle, or the like may be disposed, and all of the foregoing components may be integrally attached to one large front door to form a structure that may be opened and closed in a casement manner. In addition, parts related to power, a control board, and a light-emitting diode (LED) board may be installed in an internal mechanism unit.

The unloading unit 400 may be of a structure that may be opened or closed using a handle, and a transport element such as a wheel may be installed at a bottom of the apparatus such that the apparatus may move altogether.

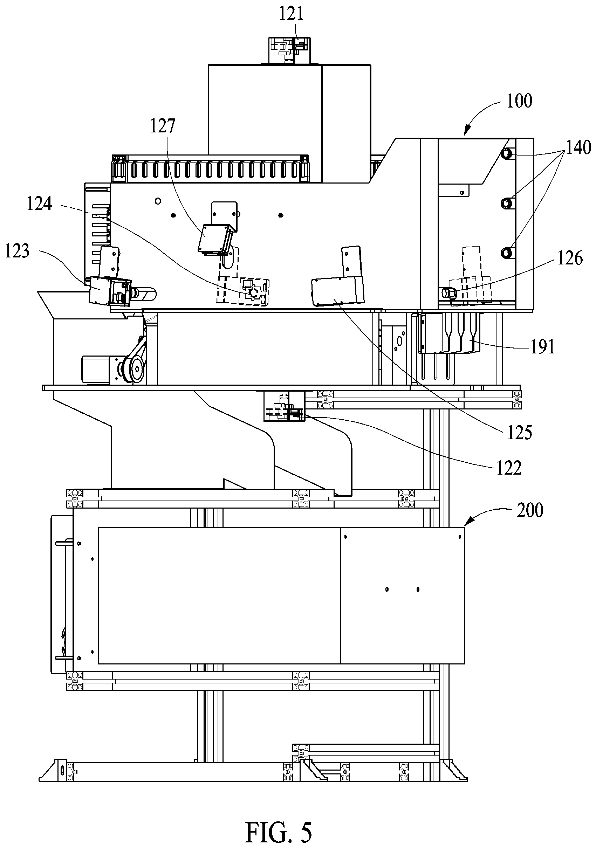

Referring to FIGS. 4 and 5, the inspection unit 100 may include a base 110 formed of a transparent material and disposed in the inspection unit 100, a first camera 121 disposed on an upper side of the base 110, a second camera 122 disposed on a lower side of the base 110, third to sixth cameras 123, 124, 125, and 126 respectively disposed at corners of side surfaces of the inspection unit 100, a seventh camera 127 disposed on one side surface of the inspection unit 100, and a determination element (not shown) configured to determine a state of a mobile phone.

Such a configuration may be provided to capture images of all of the upper end, lower end, sides, and side corners of a mobile phone to remove blind spots that may not be captured and accurately capture an image of the mobile phone accommodated in the inspection unit 100.

In this case, when a mobile phone H is disposed on the base 110, images of the top, bottom, left, and right sides of the mobile phone may be automatically captured by the first to seventh cameras, and the determination element may determine a state of the mobile phone by grade based on the images of the mobile phone captured by the plurality of cameras.

In addition, the inspection unit 100 may include a door element 130 disposed at the front of the inspection unit 100, a sensor element 140 disposed inside the inspection unit 100 to be adjacent to the door element 130 and configured to detect whether there is a user's body in the inspection unit 100, a plurality of bar-shaped lighting elements 128 disposed at upper ends of respective side surfaces of the inspection unit 100, and a tilt of each of the plurality of lighting elements may be adjusted to be in a direction facing the mobile phone disposed on the base 110.

Such a configuration of the sensor element 140 may be provided to detect an interference phenomenon when a user's hand or other foreign matter enters the inspection unit 100, and may thus allow the door element 130 to be automatically opened, thereby preventing an accident in advance and preventing damage to the apparatus.

In addition to the tilt that is adjustable, as a tilted guide is provided on the upper side of the lighting elements 128, the lighting elements 128 may be formed in a structure with an adjustable lighting section such that light is reflected from a ceiling wall and is again reflected on an image-capturing surface and thereby does not affect an image to be captured.

Referring to FIGS. 6 and 7, the inspection unit 100 may include a loader block 150 configured to move a mobile phone, at least one data cable 180 configured to be connected to the mobile phone through an opening of the loader block 150, a guide element 160 disposed on an opening side of the loader block 150 to guide the data cable 180, a cover element 170 formed in a shape surrounding an upper surface of the loader block 150, and a holder element 190 formed in a shape surrounding a portion of the data cable 180.

In this case, the loader block 150 may be formed in a squared U shape to cover a portion of the mobile phone, and may include a supporting structure 151 protruding toward the front of the loader block 150 in a tilted shape to move the mobile phone while lifting a portion of the mobile phone.

In addition, the guide element 160 may be formed in a shape in which the width increases from one side to the other side, and when the mobile phone is moved by the loader block 150, the holder element 190 may come into contact with a portion of the guide element 160 to be limited in its movement, thereby preventing the data cable 180 from being moved along with the mobile phone.

That is, such a configuration as described above may allow the loader block 150 to maintain the mobile phone to be inside the loader block 150, thereby preventing the mobile phone from deviating to both sides when the mobile phone is moved within the inspection unit 100, and may implement a viscous or frictional structure that may readily lift and push the mobile phone.

In addition, the guide element 160 and the holder element 190 may be provided to prevent the data cable 180 connected to the mobile phone from being dragged together with the mobile phone when the mobile phone is moved by the loader block 150, and may be stably retrieved along a " 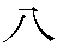 " shaped space of the guide element 160 when the mobile phone and the data cable 180 are separated.

In addition, referring to FIG. 8, the inspection unit 100 may include a plurality of data cables of different types, a case element 191 having a plurality of holes formed in a Y shape to individually accommodate and guide the cables, and a weight element 192 disposed on another portion of each data cable and configured to automatically move a data cable downward when the cable is separated from a mobile phone.

Through this weight element 192, when the data cable is separated from the mobile phone, it may be automatically moved downward by the load of the weight element 192. In addition, in the case element 191, an LED that emits light according to a data cable selected from among the different types of the data cables may be disposed to allow a user to intuitively check whether the data cable matching a mobile phone different in type is connected, and to prevent the cables from being tangled with each other and readily attach and detach a data cable to and from the mobile phone in the case of replacing the data cable.

Referring to FIG. 9, the mobile phone purchasing apparatus may further include a slope 210 configured to connect the inspection unit 100 and the collection unit 200, and the slope 210 may be formed in a gradient structure inclined downward to face both sides with respect to a center line. Such a structure may be provided to allow mobile phones moving to the collection unit 200 to be distributed into two and evenly collected.

The mobile phone purchasing apparatus including the components described above may have data cables suitable for various types, and may be configured to automatically and precisely inspect a state of a mobile phone connected to a connector of a cable, calculate a purchasing price of the mobile phone and collect it, readily sperate a data cable from a mobile phone accommodated in an inspection unit, and stably and readily move the mobile phone toward a collection unit. In addition, the mobile phone purchasing apparatus may evenly distribute mobile phones entering the collection unit.

A number of example embodiments have been described above. Nevertheless, it should be understood that various technical changes and modifications may be made to these embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A mobile phone purchasing apparatus, comprising:
an inspection unit configured to accommodate a mobile phone and perform an inspection on the mobile phone;
a collection unit disposed under the inspection unit and configured to collect the mobile phone on which the inspection has been completed;
a display unit disposed on one outer side surface of the inspection unit and configured to select a purchase-related function for the mobile phone or display information associated with the mobile phone; and
an unloading unit configured to unload the mobile phone from the collection unit,
wherein a plurality of cameras is disposed on upper, lower, and side surfaces of the inspection unit, and
when the mobile phone is accommodated in the inspection unit, a state of the mobile phone is automatically inspected, and
when the inspection by the inspection unit has been completed, the mobile phone is automatically moved toward the collection unit by a loader block disposed in the inspection unit.

2. The mobile phone purchasing apparatus of claim 1, wherein the inspection unit comprises:
a base formed of a transparent material and disposed in the inspection unit;
a first camera disposed on an upper side of the base;
a second camera disposed on a lower side of the base;
third to sixth cameras disposed at corners of the side surfaces of the inspection unit, respectively;
a seventh camera disposed on one side surface of the inspection unit; and
a determination elememt configured to determine the state of the mobile phone, wherien, when the mobile phone is disposed on the base, images of the upper, lower, and left and right side surfaces are automatically captured by the first through seventh cameras, and
the determination element is configured to determine the state of the mobile phone by grade based on the images of the mobile phone captured by the plurality of cameras.

3. The mobile phone purchasing apparatus of claim 2, wherein the inspection unit comprises:
a door element disposed at the front of the inspection unit;
a sensor element disposed inside the inspection unit to be adjacent to the door element and configured to detect whether a body of a user is present inside the inspection unit; and
a plurality of bar-shaped lighting elements disposed at upper ends of respective side surfaces of the inspection unit,
wherein a tilt of each of the plurality of lighting elements is adjusted to be in a direction facing the mobile phone disposed on the base.

4. The mobile phone purchasing apparatus of claim 3, wherein the inspection unit comprises:
a loader block configured to move the mobile phone;
at least one data cable configured to be connected to the mobile phone through an opening of the loader block;
a guide element disposed on an opening side of the loader block and configured to guide the data cable;
a cover element formed in a shape surrounding an upper surface of the loader block; and
a holder element formed in a shape surrounding a portion of the data cable,
wherein the loader block is formed in a squared U shape to cover a portion of the mobile phone and comprises a supporting structure protruding toward the front of the loader block in a tilted shape to move a portion of the mobile phone with the portion of the mobile phone lifted,
the guide element is formed in a shape in which a width increases from one side to the other side, and
when the mobile phone is moved by the loader block, the holder element is configured to come into contact with a portion of the guide element to have a limited movement, and to prevent the data cable from moving along with the mobile phone.

5. The mobile phone purchasing apparatus of claim 4, wherein the inspection unit comprises:
a plurality of data cables of different types;
a case element having a plurality of holes formed in a shape of Y to individually accommodate and guide each of the cables; and
a weight element disposed on the other side of each of the data cables, and configured to automatically move a data cable downward when the data cable is separated from the mobile phone.

6. The mobile phone purchasing apparatus of claim 5, further comprising:
a slope configured to connect the inspection unit and the collection unit,
wherein the slope is formed in a gradient structure inclined downward to both sides with respect to a center line.
